Europäisches Patentamt

European Patent Office

Office européen des brevets

(11) Publication number: **0 502 211 A1**

## EUROPEAN PATENT APPLICATION
## published in accordance with Art. 158(3) EPC

(21) Application number: 91916618.1

(22) Date of filing: **20.09.91**

(51) Int. Cl.⁵: **G06F 12/10**

(86) International application number:
**PCT/JP91/01261**

(87) International publication number:
**WO 92/05494 (02.04.92 92/08)**

(30) Priority: **20.09.90 JP 248950/90**

(43) Date of publication of application:
**09.09.92 Bulletin 92/37**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **TAKAHASHI, Hiromasa, Fujitsu**
**Limited**
**1015, Kamikodanaka Nakahara-ku**
**Kawasaki-shi**
**Kanagawa 211(JP)**
Inventor: **IINO, Hideyuki, Fujitsu Limited**
**1015, Kamikodanaka Nakahara-ku**
**Kawasaki-shi Kanagawa 211(JP)**

(74) Representative: **Billington, Lawrence Emlyn et al**
**Haseltine Lake & Co Hazlitt House 28,**
**Southampton Buildings Chancery Lane**
**London WC2A 1AT(GB)**

(54) SYSTEM EQUIPPED WITH PROCESSOR AND METHOD OF CONVERTING ADDRESSES IN SAID SYSTEM.

(57) A system comprising a processor (1) for converting addresses by the use of a multistage conversion table for making memory access and a main storage (2), wherein the processor includes first memory means (3) for storing part of the multistage conversion table, and the main storage (2) includes second memory means (4) for storing the rest of the conversion table. Address conversion from a logical address LA to a physical address PA can be made rapidly through a relatively simple control by searching the conversion table of the second memory means by the use of the entry address obtained by searching the conversion table of the first memory means, and eventually, performance of the overall system can be improved.

# Fig.4

RETRIEVAL ⟶

PROCESSOR ~1

FIRST MEMORY UNIT ~3

ENTRY ADD. (RETRIEVAL)

SECOND MEMORY UNIT 4~

ADD. TRANSLATION (LA→PA)

MAIN MEMORY 2~

TECHNICAL FIELD

The present invention relates to an address translating system, more particularly, to a technology of effecting an address translation using a multi-stage translation table in a system provided with a processor for accessing specific data such as vector data and a main memory when the processor makes an access to the memory.

Recently developed computer systems have been demanded to implement high speed numerical operations and those processors for such numerical operations have been developed. Particularly, as in cases of super computers, high speed numerical operations are often implemented in terms of vector. Data to be used in vector operations are vector-termed and, when loading/storing this vector-termed data from the memory system for the processor, only limited kinds of accessing are executed, in most cases, as compared with the memory access by a common processor. Also for the limited kinds of memory access, therefore, a technology which allows a high speed address translation by a relatively simple control is demanded.

BACKGROUND ART

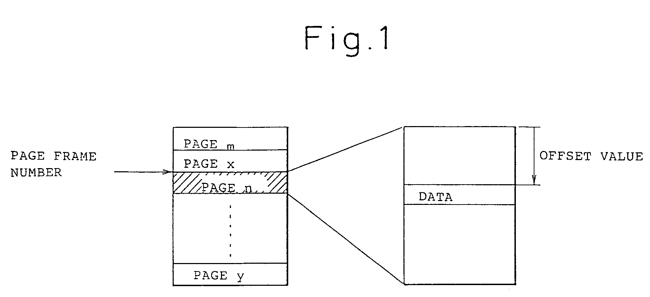

In a computer system which employs a virtual storage system, as shown, for example, in Figure 1, the main memory is divided into areas referred to as the "page" for use and physical addresses which indicate individual areas can be obtained from address translation made by the processor using the address comparison table for each page with respect to a logic address which is actually used in the processor. This comparison table is referred to as the address translation table. In a common 32-bit computer system, for example, the size of each page is approximately 4KB (B indicates the byte) or 8KB in most cases.

Accordingly, for accessing to a memory space, the processor should inevitably translate a computed logic address to a physical address by using the translation table. In an actual system, however, the size of the logic address space denoted with 32 bits is approximately 4GB and the number of translation tables which correspond to the logic address space is a huge value as a 1M entry in case of a gape of 4KB capacity. Therefore, the actual system employs a multi-stage, for example, 2 to 3-stage, address translation table in most cases.

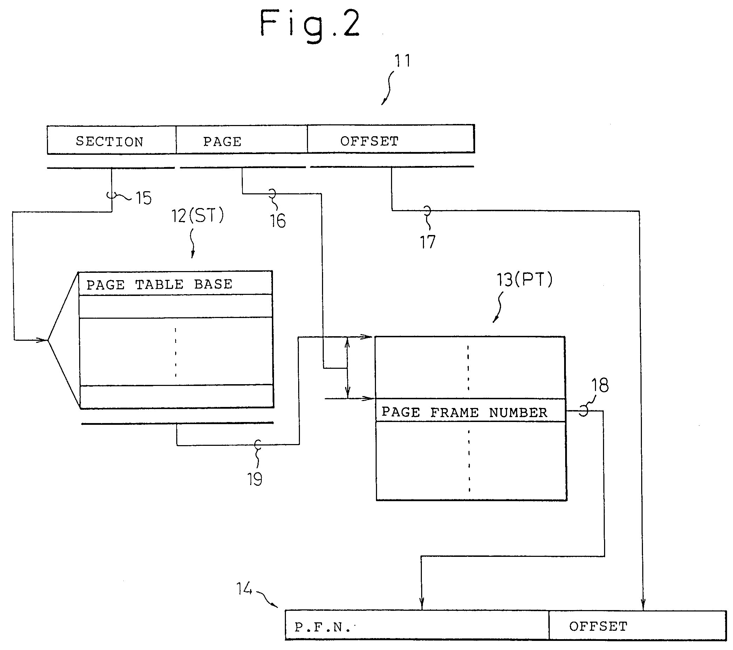

Figure 2 shows an example of the address translation system using a 2-stage translation table.

The high order translation table of two translation tables shown as examples is referred to as the section table (ST) and the low order translation table is referred to as the page table (PT). 12 denotes a storage unit which stores the section table and 13 denotes a storage unit which stores the page table.

In this system, the address space is divided into large memory areas (usually, 256KB to 4MB) referred to as "sections" and each section is divided into a plurality of areas referred to as "pages". In this case, the logic address 11 consists of the section index 15 as the high order area, the page index 16 as the intermediate order area and the offset 17 as the lower order area. The offset 17 indicates a displacement in the page and the offset in case of the page for the 4KB capacity consists of 12 bits.

The base address 19 of the page table for the page included in an appropriate section is stored in each entry of the section table ST so that the corresponding entry is selected in accordance with the section index 15, while the page frame number 18 necessary for actually translating a logic address to a physical address is stored in each entry of the page table PT. The page table PT is retrieved according to the page table base address 19 and the page index 16 stored in each entry of the section table, thereby a corresponding page table entry is selected and the page frame number 18 thus retrieved is coupled to the offset 17 to thereby form an actual physical address 14.

In the conventional systems the section table ST and the page table PT have been stored in the main memory and, therefore, for address translation, it has been necessary to retrieve the section table, then retrieve the page table PT using the results of the above retrieval. Accordingly, there has been a problem that address translation requires a lot of time.

As a solution to this problem, a conventionally known practical processor incorporates a buffer for the translation table referred to as the TLB (Table look-aside Buffer). This TLB holds the page frame number used last and a tag information corresponding to each entry. Thus, when the translation table entry for the logic address computed in the processor is present in the TLB (when the TLB is hit), the translation table in the main memory need not be retrieved each time and high speed address translation is enabled.

On the other hand, if there is no corresponding entry in the TLB (when the TLB is missed), the processor should detect the oldest used entry from the corresponding TLB and store the new page frame number obtained from the result of retrieval of the section table and the page table in the main memory. In this case, the TLB requires complex operations and data to be used in the processor are often located near

3

EP 0 502 211 A1

the instruction and data which were used last, the probability of hitting the TLB in the next access is relatively high. Therefore, even though the processing speed when the TLB is missed is low, an improvement for higher speed processing can be implemented for the whole system.

However, though there is no problem in a usual memory access in the processor as described above, the data which has been accessed once is less accessed again for the nature of vector data in the processor for numerical operations which processes specific data such as, for example, vector data. Therefore, even in such a specific processor which incorporates the TLB, there is a problem that the hitting ratio is extremely low and a penalty in the missing of the TLB is large, whereby the performance of the whole system deteriorates.

DISCLOSURE OF THE INVENTION

An object of the present invention is to perform high speed address translation through a relatively simple control and improve the performance of the whole system.

To fulfill this object, the present invention allows to provide part of the multi-stage translation table, which is originally stored in the main memory, at the processor side to reduce unnecessary accesses to the main memory.

Therefore, according to a first aspect of the present invention, there is provided a system which is provided with a processor, which carries out address translation using a multi-stage translation table for an access to a memory, and a main memory, the processor having a first storage unit for storing part of the above described multi-stage translation table and the main memory having a second storage unit for storing the remaining of the multi-stage translation table, and characterized to retrieve the translation table of the second storage unit using an entry address obtained from retrieving the translation table of the first storage unit, thereby performing address translation from logic addresses to physical addresses.

Also, according to a second aspect of the present invention, there is provided an address translation method for address translation from logic addresses to physical addresses in a system which is provided with a processor, which has the section tables which correspond to those sections formed by dividing an address space into relatively large storing areas, as part of a multi-stage translation table, and a main memory, which has the page tables which correspond to those pages formed by further dividing the sections into a plural number of areas, as the remaining of the multi-stage translation table and has a step for retrieving the translation table at the main memory side according to the generated entry address, whereby the address translation method is characterized to perform address translation from logic addresses to physical addresses.

According to the configuration of the first aspect, since part of the multi-stage translation table is provided at the processor side, the processing in the case that the translation table entry corresponding to the logic address computed in the processor does not exist in the processor (when missed) can be continuously carried out up to a halfway stage in the processor, the translation table in the main memory can be finally retrieved and the number of times of access to the main memory can be relatively reduced. Therefore, address translation can be carried out at a high speed in a relatively simple control mode. This will contribute to an improvement of the performance of the whole system.

Note, the details of the operation and effect of the second aspect of the present invention and the characteristics and operations of other configurations are described by way of the embodiments described below with reference to the accompanying drawings.

BRIEF DESCRIPTION OF THE DRAWINGS

Figure 1 is an example of the address translation table;
Figure 2 is a block diagram showing an example of the address translation method using a two-stage translation table;
Figure 3 is a block diagram showing a configuration of a system to which the conventional address translation method applies;
Figure 4 is a principle configuration diagram of the address translation method according to the present invention;
Figure 5 is a block diagram showing a system configuration to which the address translation method according to the present invention applies;
Figure 6 is a block diagram supplementally showing the configuration of the processor shown in Figure 5; and
Figure 7 is a block diagram showing a configuration of the address unit shown in Figure 6.

4

BEST MODE FOR CARRYING OUT THE INVENTION

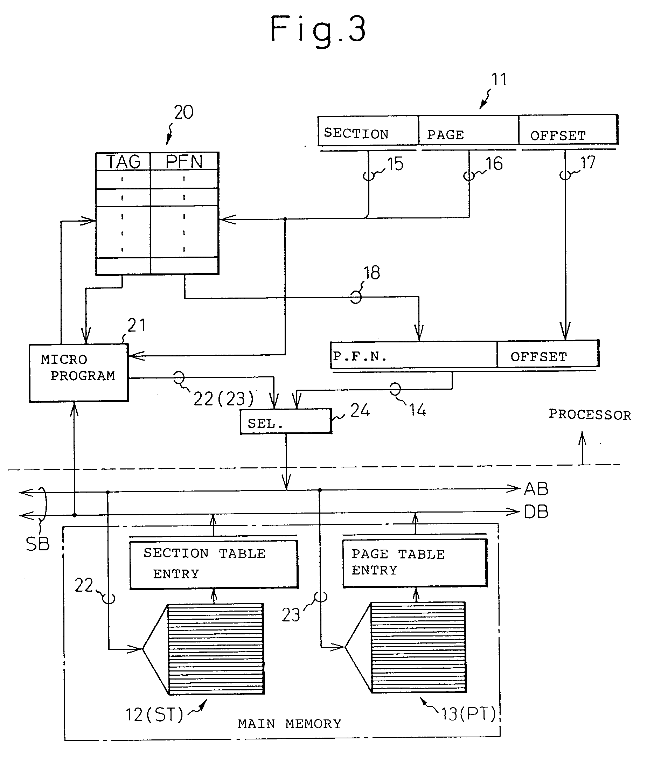

The following describes the problems in the prior art, referring to Figure 3 to ensure better understanding of an embodiment according to the present invention.

Figure 3 shows a system configuration to which the conventional address translation method applies.

As shown in Figure 3, a practical processor of the conventional mode incorporates a buffer 20 for the translation table referred to as the TLB. The TLB 20 is a buffer for holding the page frame number [PFN]18 which is used last in the processor and TAG information which correspond to respective entries and usually has a capacity for approximately 32 to 64 entries in most cases. 21 denotes a micro program for controlling the TLB 20, 22 denotes the section table entry address, 23 denotes the page table entry address and 24 denotes the selector for selecting addresses 22 and 23 or physical address 14 and sending it to the system bus SB (including the address bus AB and the data bus DB).

In the configuration shown in Figure 3, if the translation table entry for the logic address computed in the processor exists in the TLB 20(when the TLB 20 is hit), the translation tables ST and PT in the main memory need not be retrieved and therefore high speed address translation can be carried out. If there is no corresponding entry in the TLB 20 (when the TLB is missed), the processor should delete the entry, which is used earliest, from the corresponding to TLB, retrieve the section table ST and the page table PT in the main memory as the corresponding entry and store the new page frame number 18 obtained as a result of this retrieval in the TLB 20. In this case, the TLB 20 requires complex operations including retrieval of external tables. Generally, however, since the instructions and data to be used are often located near the instructions and data which were used last in the processor as described above, the probability of hitting the TLB 20 in the next access is relatively high. Therefore, the processing speed of the system as a whole can be substantially hastened even though the processing when the TLB 20 is missed is slow.

However, though there will be a considerable problem in usual memory access of the processor, the processor for numerical operation which processes special data such as, for example, vector data often continuously accesses to a great deal of data which is continuously arranged on the memory and will therefore encounter with problems as described below.

Assuming, for example, the case that 2000 items of data are to be continuously accessed, continuous 8B double-precision data is 16KB which accounts for 4 to 5 pages. In case of this access, these pages are accesses in sequence and the preceding page will not be used again. For the nature of vector data, there are few cases that the data which was accessed once is accessed again. Therefore, it is known from taking these points into account that, though such special processor incorporates the TLB, the hitting percentage is low and the penalty when the TLB is missed is large to result in the deterioration of performance the whole system.

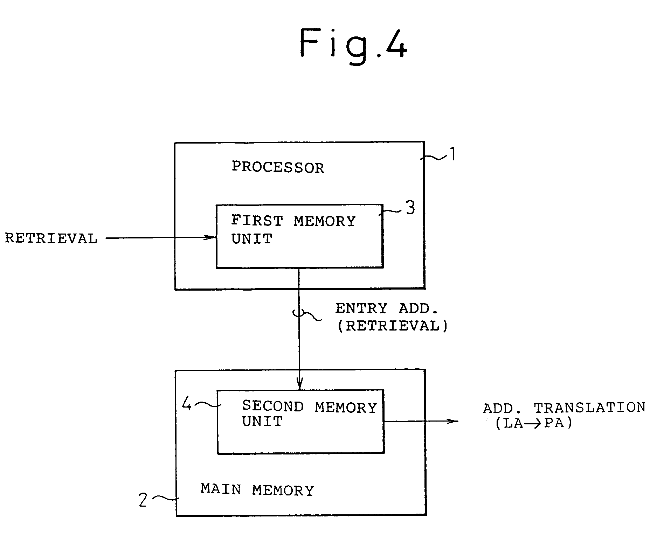

Figure 4 shows the principle configuration of the address translation system according to the present invention. 1 is a processor which carries out address translation with a multi-stage translation table at the time of memory access and 2 is a main memory. The processor 1 has the first storage unit 3 which stores part of the multi-stage translation table and the main memory 2 has the second storage unit 4 which stores the remaining of the multi-stage translation table. Address translation from the logic address LA to the physical address PA can be carried out by retrieving the translation table in the first storage unit 3 to generate an entry address and retrieving the translation table in the second storage unit 4 with this entry address.

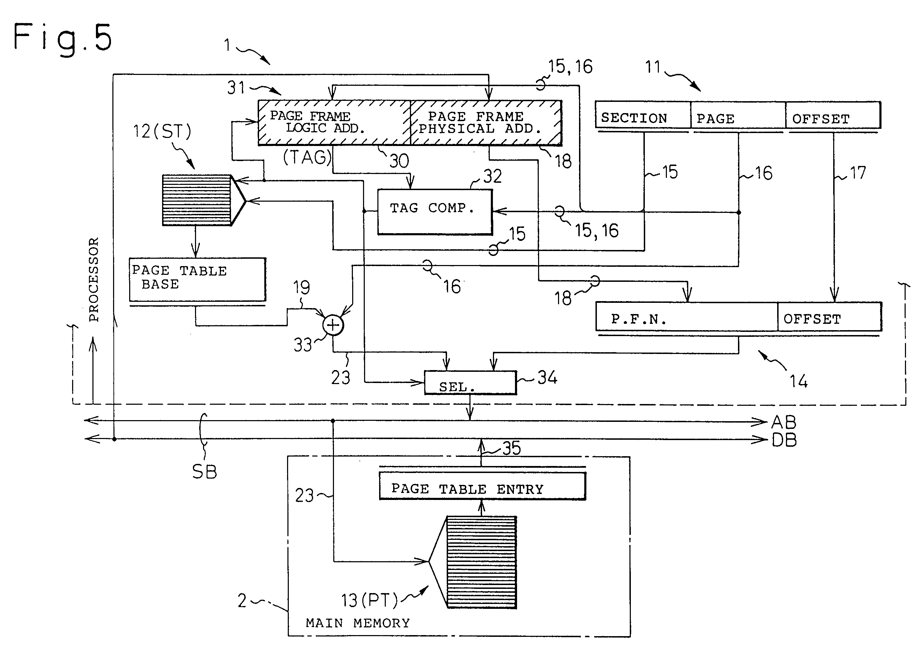

The following describes the embodiment according to the present invention, referring Figures 5 to 7.

Figure 5 shows the system configuration to which the address translation method applies. In Figure 5, the same codes as used in Figures 2 and 3 denote the equivalent components and the descriptions of these components are omitted.

This system is provided with the present translation table register 31 which stores a pair of logic value 30 and physical value 18 of the page frame number of the page being currently used and address translation in the current page is carried out using these values. In this case, the present translation table is kept "hit" until the computed logic address 11 exceeds the limit value (page boundary value) of the current page. Whether the logic page boundary is exceeded is checked by comparing the frame number of the computed logic address page and the page frame logic address 30 (TAG) in the register 31.

When the logic address exceeds the boundary value, the present translation table comes in the "missed" condition and it therefore necessary to obtain a page frame number corresponding to a new logic page by retrieving the address translation table. In this case, an operation corresponding to missing of the TLB as observed in the conventional mode and conventionally the page table has been retrieved using the results of retrieving the section tables in the main memory.

In this embodiment, the section table ST is incorporated as a register 12 for the section table in the

5

EP 0 502 211 A1

processor (chip) as shown. The number of entries of the register 12 for the section table relates to the size of the address space which can be supported. For example, in case of a 4MB section, a space of 128MB can be supported with 32 entries and a space 256 MB with 64 entries.

Therefore, when the present translation table is missed, the section table is retrieved by retrieving the register 12 for the section table contained in the chip. In this case, the retrieval can be carried out at a further high speed than in the access of the main memory in the conventional mode.

The page table base address 19 thus obtained is added to the page index 16 of the logic address in the adder 33. This added value is sent as the page table entry address 23 to the system bus SB through the selector 34, and supplied to the main memory 2. A new page table entry can be obtained by retrieving the main memory 2 with this page table entry address 23. When the logic address 11 computed in the processor exceeds the boundary value of the current page (that is, when missed), the selector 34 selects to output the output of the adder 33 in accordance with the result of comparison by the TAG comparison circuit 32 and, when the logic address 11 is within the range of the current page (that is, when hit), the selector 34 selects to output the physical address 14 in the processor.

In the event the TLB is missed in the conventional method (see Figure 3), such procedures as (1) retrieval of the section table (memory access), (2) generation of a page table entry address, (3) retrieval of the page table (memory access) and replacement of the TLB have been required and a micro program 21 for controlling these operations has been required.

On the contrary, according to this method, the operations from retrieval of the section table ST to generation of the page table entry address 23 can be continuously carried out in the processor 1 and the retrieval of the page table PT in the main memory 2 can be carried out by read operation similar to usual access to the main memory. The page table entry 35 which is read out can be simply set in the present translation table register 31.

The following describes the configuration of the processor 1 for forming the logic address 11.

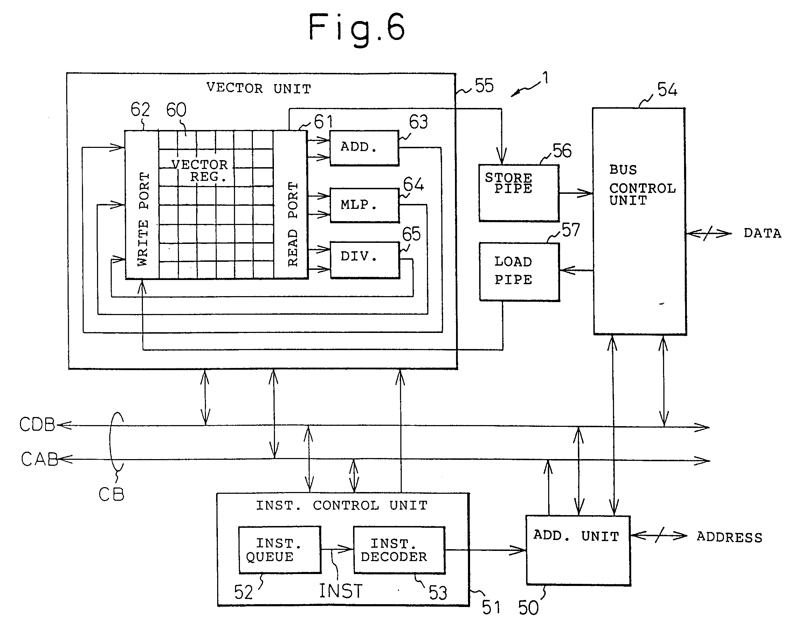

Figure 6 supplementally shows the configuration of the processor 1 shown in Figure 5 and the processor of this embodiment has a mode of a single chip vector operation processor LSI.

The configuration as shown includes a chip bus CB (address bus CAB and data bus CDB), an address unit 50 connected to the chip bus CB, an instruction control unit 51 connected to the chip bus CB, a bus control unit 54 connected to the chip data bus CDB, a vector unit 55 connected to the chip bus CB, and a store pipe 56 and a load pipe 57 which are connected between the vector unit and the bus control unit 54 and control the pipe line processing. In this case, the instruction control unit 51 has the instruction queue (buffer) 52 which generates an instruction INST and the instruction decoder 53 which decodes the instruction INST and sends the result of decoding to the address unit 50.

The vector unit 55 has a vector register 60 for storing vector data, a read port 61 for reading out the data from the vector register, a write port 62 for writing the data in the vector register 60, and an adder 63, multiplier 64 and divider 65 which respectively carry out addition, multiplication and division of data read through the read port 61. The above described store pipe 56 has the functions to store the data read out from the vector register 60 through the read port 61, carry out appropriate pipe line processing and send the result to the bus control unit 54, while the load pipe 57 has the functions to load the data fetched from the data bus through the bus control unit 54, similarly carry out appropriate pipe line processing and send the result to the write port 62.

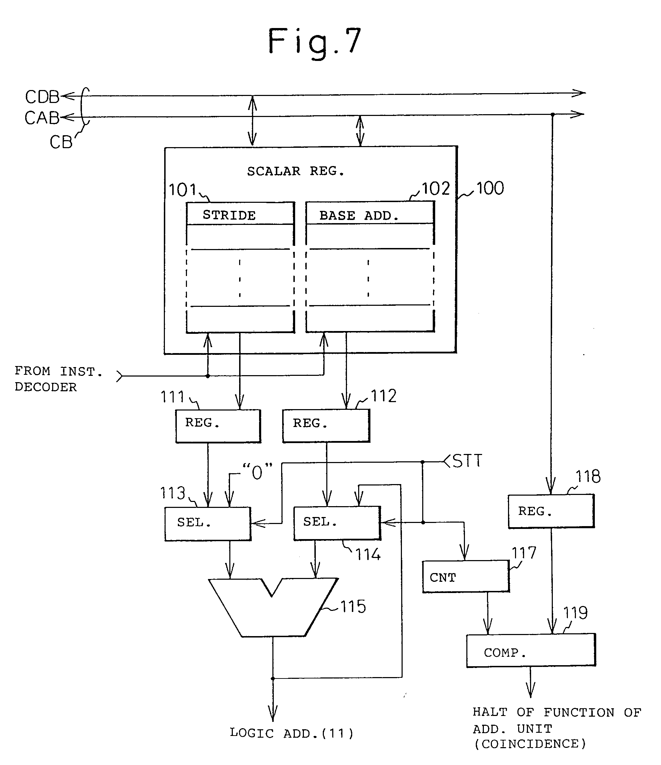

The configuration of the address unit 50 is shown in Figure 7.

The address unit as shown has a scalar register 100 provided with registers 101 and 102 which store a stride (information which indicates the distance between elements of vector data) fetched through the chip bus CB and a base address (information which indicates the reference address of vector data) and output the corresponding stride information and base address information in response to the results of decoding of the instruction decoder 53, registers 111 and 112 which temporarily store the stride and the base address respectively read from the registers 101 and 102, a selector 113 which selects and outputs data "0" or the data from the register 111 according to the load/store start signal STT, a selector 114 which selects and outputs the data from the register 112 or the output data (corresponding to the logic address 11) of the adder, described later, similarly according to the load/store start signal STT, an adder 115 which add output data of selectors 113 and 114 and generate the logic address 11, a counter 117 which enters the load/store start signal STT and counts the addresses in accordance with the vector length (a length of vector data), a register 118 which stores the data with the vector length fetched through the chip bus CB, and a comparator 119 which compares the contents of the register and the count value of the counter 117.

In this configuration, the comparator 119 outputs a control signal to stop the function of an appropriate address unit 50 when the count value (an address in accordance with the vector length) of the counter 117 coincides with the contents of the register 118. The load/store start signal STT is outputted when the read

6

EP 0 502 211 A1

of data from registers 101 and 102 in the scalar register 100 is started. In this case, the selectors 113 and 114 select and output data "0" and the data from the register 112 when the load/store start signal STT is outputted and subsequently select and output the data from the register 111 and the output data (corresponding to the logic address 11) of the adder 115.

As described above, according to the address translation method of this embodiment, where there is no translation table entry corresponding to the logic address 11 computed by the address unit 50 in the processor 1 (when missed), the processing up to the halfway stage (from the retrieval of the section table ST to generation of the page table entry address 23) can be continuously carried out in the processor 1 and finally the page table PT in the main memory can be retrieved. Therefore, the number of times of access to the main memory can be only once, address translation can be carried out at a high speed and the control circuit for this purpose can be far more simplified than in the conventional case that the TLB is missed. This contributes to an improvement of the performance of the whole system.

| List of Reference Marks and Particulars | |
|---|---|
| Reference Marks | Particulars |
| 1 | processor |
| 2 | main memory |
| 3 | unit for storing a portion of translation table |
| 4 | unit for storing the remaining of translation table |
| 11, LA | logic address |
| 12 | unit for storing section table(register) |
| 13 | unit for storing page table(register) |
| 14, PA | physical address |
| 15 | section index |
| 16 | page index |
| 17 | offset |
| 18 | page frame number |
| 19 | base address of page table |
| 31 | present translation table register |
| 32 | TAG comparing circuit |
| 33 | adder |
| 34 | selector |
| 35 | Page table entry |
| 50 | address unit |
| 55 | instruction control unit |

**Claims**

1. A system comprising a processor (1) and a main memory (2) for carrying out an address translation using a multi-stage translation table in an execution of memory access and a main memory (2), said processor having first storage means (3, 12) which store part of said multi-stage translation table, said main memory having second storage means (4, 13), wherein said system is characterized in that the translation tables of said second storage means are retrieved using entry addresses obtained from retrieval of the translation tables of said first storage means to thereby carry out an address translation from a logic address (LA, 11) to a physical address (PA, 14).

2. A system in accordance with Claim 1, wherein said processor has an address unit (50) for generating said logic address (11).

3. A system in accordance with Claim 2, wherein said logic address (11) has an index (15) which indicates sections formed by dividing an address space into relatively large storage areas and an index (16) which indicates pages formed by dividing each of said sections into a plurality of areas, translation tables stored in said first storage means (12) are section tables (ST) which correspond to said sections and store a page table base address (19) for each entry, and translation tables stored in said second storage means (13) are page tables (PT) which correspond to said pages and store a page frame

7

number (18) necessary for translating a logic address to a physical address for each entry.

4.  A system in accordance with Claim 3, wherein said processor has a third storage means (31) which has a pair of a logic address value (30, TAG) indicating a frame number of a page which was used last and a physical address value (18) as an entry, means (32) for comparing the logic address value in said third storage means with a logic address generated by said address unit and means (33, 34) which accesses said first storage means and generates an entry address (23) of said page table when said logic address generated according to the result of said comparison exceeds a boundary value of a current page, and said main memory has means for accessing said second storage means according to said generated entry address and reading a corresponding page table entry whereby said processor sets said read page table entry in said third storage means to obtain a page frame number (18) corresponding to a new logic page and generate a physical address (14).

5.  A system in accordance with Claim 4, wherein said means for generating said page table entry address has means for generating said page table base address using an index (15) which indicates said section, means (33) for adding an index which indicates said generated page table base address and said page, and a selector means (34) for selecting and outputting said added address value as a page table entry address.

6.  A system in accordance with Claim 5, wherein said selector means selects and outputs said added address value when said logic address generated according to the result of comparison of said generated logic address and a logic address value in said third storage means and a physical address when said generated logic address is within the range of the current page.

7.  A system in accordance with Claim 2, wherein said processor further has an instruction control means (51) for generating an instruction (INST) and decoding said instruction and said address unit generates said logic address according to the result of said decoding.

8.  A system in accordance with Claim 7, wherein said address unit has a first selection means (113) which selects and outputs a specified data value ("0") or the value of said output stride information, a second selection means (114) which selects and outputs a value of said output base address information or a value of added data, and means (115) for generating said added data by adding data selected and output respectively by said first and second selection means and outputting said added data as said logic address (11).

9.  A system in accordance with Claim 8, wherein said first and second selection means select and output the value of said specified data and the value of said output base address information when the loading/storing of vector data is started and the value of said output stride information and the value of said added data after said loading/storing operations have been started.

10. A system in accordance with Claim 8, wherein said address unit has a counter means (117) which starts counting operation when loading/storing of vector data is started, a register means (118) which stores data in accordance with a length of vector data fetched through an internal bus and means (119) for comparing the value of data stored in said register means and a count value of said counter means, whereby the function of said address unit is stopped according to the result of said comparison when both values of data coincide.

11. A system in accordance with one of Claims 1 to 10, wherein said processor is a single chip vector operation type processor.

12. An address translation method of carrying out address translation from a logic address (11) to a physical address (14) in a system, which is provided with a processor having a section table (12) corresponding to sections obtained by dividing an address space into relatively large storage areas as part of a multi-stage translation table and a main memory having a page table (13), which corresponds to pages formed by further dividing each of said sections into a plurality of areas, as the remaining of said multi-stage translation table, said address translation method comprising a step of generating an entry address by retrieving said translation table at said processor side and a step for retrieving said translation table at said main memory side in accordance with said generated entry address, whereby said translation from a logic address to a physical address is carried out.

13. An address translation method in accordance with Claim 12, wherein said step of generating an entry address has a step of generating said logic address, a step of comparing said generated logic address with a logic address value which indicates a frame number of a page which was used last, a step of generating a page table base address by using an index which indicates said section when said generated logic address according to the result of said comparison exceeds a boundary value of a current page, and a step of adding an index which indicates said page to said generated page table base address and generating the entry address of said page table.

14. An address translation method in accordance with Claim 12, wherein said step of generating a translation table at said main memory side has a step of reading an appropriate page table entry in said page table in accordance with an entry address generated at said processor side.

15. An address translation method in accordance with Claim 14, after the step of reading a page table entry, further comprising a step of setting said read page table entry in said processor, obtaining a page frame number corresponding to a new logic page and thereby generating a physical address.

# Fig.1

```
                    ┌─────────────┐        ┌──────────────────┐  ┬
                    │  PAGE m     │        │                  │  │
PAGE FRAME          ├─────────────┤        │                  │  │ OFFSET VALUE
NUMBER              │  PAGE x     │        │                  │  │
         ─────────→ ├─────────────┤        │                  │  ↓
                    │///PAGE n////│        ├──────────────────┤
                    ├─────────────┤        │   DATA           │
                    │      .      │        ├──────────────────┤
                    │      .      │        │                  │
                    │      .      │        │                  │
                    ├─────────────┤        │                  │
                    │  PAGE y     │        └──────────────────┘
                    └─────────────┘
```

# Fig.2

EP 0 502 211 A1

# Fig.3

# Fig.4

PROCESSOR  ∼1

RETRIEVAL ⟶ FIRST MEMORY UNIT  ∼3

ENTRY ADD.
(RETRIEVAL)

SECOND MEMORY UNIT  4∼

ADD. TRANSLATION
(LA→PA)

MAIN MEMORY

2∼

# Fig.5

EP 0 502 211 A1

# Fig.6

EP 0 502 211 A1

# Fig.7

CDB

CAB

CB

SCALAR REG.

101 STRIDE

102 100

BASE ADD.

FROM INST. DECODER

111 REG.

112 REG.

STT

"0"

113 SEL.

114 SEL.

118 REG.

115

117 CNT

119 COMP.

LOGIC ADD.(11)

HALT OF FUNCTION OF ADD. UNIT (COINCIDENCE)

16

# INTERNATIONAL SEARCH REPORT

International Application No  PCT/JP91/01261

**I. CLASSIFICATION OF SUBJECT MATTER (if several classification symbols apply, indicate all)** 6

According to International Patent Classification (IPC) or to both National Classification and IPC

Int. Cl$^5$   G06F12/10

**II. FIELDS SEARCHED**

| Minimum Documentation Searched 7 | |
|---|---|
| Classification System | Classification Symbols |
| IPC | G06F12/10 |

Documentation Searched other than Minimum Documentation
to the Extent that such Documents are Included in the Fields Searched 8

| | |
|---|---|
| Jitsuyo Shinan Koho | 1971 – 1991 |
| Kokai Jitsuyo Shinan Koho | 1971 – 1991 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 60-150148 (Digital Equipment Corp.), August 7, 1985 (07. 08. 85), (Family: none) | 1-15 |
| Y | JP, A, 61-15249 (Toshiba Corp.), January 23, 1986 (23. 01. 86) & US, A, 4731740 | 1-15 |
| Y | JP, A, 62-34257 (Yokogawa-Hewlett-Packard, Ltd.), February 14, 1987 (14. 02. 87) & EP, A1, 215544 & US, A, 4774653 | 1-15 |
| A | JP, A, 61-125656 (NEC Corp.), June 13, 1986 (13. 06. 86), (Family: none) | 1-15 |

* Special categories of cited documents: 10

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| December 2, 1991 (02. 12. 91) | December 24, 1991 (24. 12. 91) |
| International Searching Authority | Signature of Authorized Officer |
| Japanese Patent Office | |

Form PCT/ISA/210 (second sheet) (January 1985)